# EUROPEAN PATENT APPLICATION

(11) **EP 4 578 671 A1**
(43) Date of publication of application: **02.07.2025**
(21) Application number: 23856920.6
(22) Date of filing: 26.05.2023
(51) Int. Cl.: B60C 19/00

(54) **PNEUMATIC TIRE**

(30) Priority: 26.08.2022 JP 2022135366
(71) Applicant: BRIDGESTONE CORPORATION, Chuo-ku Tokyo 104-8340 (JP)
(72) Inventor: ONO Takatoshi, Tokyo 104-8340 (JP); ITO Yujiro, Tokyo 104-8340 (JP)
(74) Representative: Marks & Clerk LLP
(86) International application number: PCT/JP2023/019790
(87) International publication number: WO 2024/042802

(57) **Abstract**

The provided is a pneumatic tire, comprising a carcass consisting of one or more carcass plies that straddle in a toroidal shape between a pair of bead portions, wherein the carcass ply is made of radially arranged carcass cords covered with rubber, the pneumatic tire is provided with a communication device with an antenna, the antenna has a part in which a predetermined shape, where the antenna is folded back at a vertex to a direction perpendicular to an extending direction and travels back and forth, is repeatedly arranged in the extending direction, and at least one of the vertices is located in a position that does not intersect the carcass cord when viewed from a direction that is perpendicular to a surface of the pneumatic tire.

## Description

### TECHNICAL FIELD

This disclosure relates to a pneumatic tire.

### BACKGROUND

The pneumatic tires provided with a communication device such as a radio frequency (RF) tag, which has memory, etc., for reading and writing data related to the manufacturing management, shipping management, usage history management, and others of the tires have been known (for example, Patent Document 1). As such a communication device, the device has been proposed, which has an antenna having a part in which a predetermined shape, where the antenna is folded back at a vertex to a direction perpendicular to an extending direction and travels back and forth, is repeatedly arranged in the extending direction (for example, Patent Document 2).

### CITATION LIST

### Patent Literature

PTL 1: JP 2016-037235 A
PTL 2: JP 2022-084145 A

### SUMMARY

### (Technical Problem)

When the present inventors considered providing a communication device to a pneumatic tire, which has an antenna having a part in which a predetermined shape, where the antenna is folded back at a vertex to a direction perpendicular to an extending direction and travels back and forth, is repeatedly arranged in the extending direction, it was found that there were cases where the durability of the antenna is not sufficient.

Therefore, the object of the present disclosure is to provide a pneumatic tire comprising a communication device and having an improved durability on the antenna of the communication device.

### (Solution to Problem)

The gist of the present disclosure is as follows.
(1) A pneumatic tire, comprising a carcass consisting of one or more carcass plies that straddle in a toroidal shape between a pair of bead portions, wherein
   the carcass ply is made of radially arranged carcass cords covered with rubber,
   the pneumatic tire is provided with a communication device with an antenna,
   the antenna has a part in which a predetermined shape, where the antenna is folded back at a vertex to a direction perpendicular to an extending direction and travels back and forth, is repeatedly arranged in the extending direction, and
   at least one of the vertices is located in a position that does not intersect the carcass cord when viewed from a direction that is perpendicular to a surface of the pneumatic tire.

In this document, the term "prescribed pitch interval" of carcass cords means the distance between the centers of adjacent carcass cords.

### (Advantageous Effect)

According to the present disclosure, it is possible to provide a pneumatic tire comprising a communication device and having an improved durability on the antenna of the communication device.

### BRIEF DESCRIPTION OF THE DRAWINGS

In the accompanying drawings:
FIG. 1 is a plan view of an RF tag;
FIG. 2 is a perspective view of the RF tag;
FIG. 3 is a perspective view of the RF tag with a lid of an exterior body removed;
FIG. 4 is an exploded perspective view of the RF tag;
FIG. 5 is a plan view of a second antenna;
FIG. 6 is a partial cross-sectional view of the RF tag;
FIG. 7 is a cross-sectional view (half) in the tire width direction of a pneumatic tire according to one embodiment of the present disclosure;
FIG. 8 is a drawing used to explain the position of the vertex; and
FIG. 9 is a drawing of another example used to explain the position of the vertex.

### DETAILED DESCRIPTION

Hereinafter, embodiments of the present disclosure will be described in detail with reference to the drawings.

### <Communication device>

First, a communication device provided in a pneumatic tire will be described.

### [Communication device]

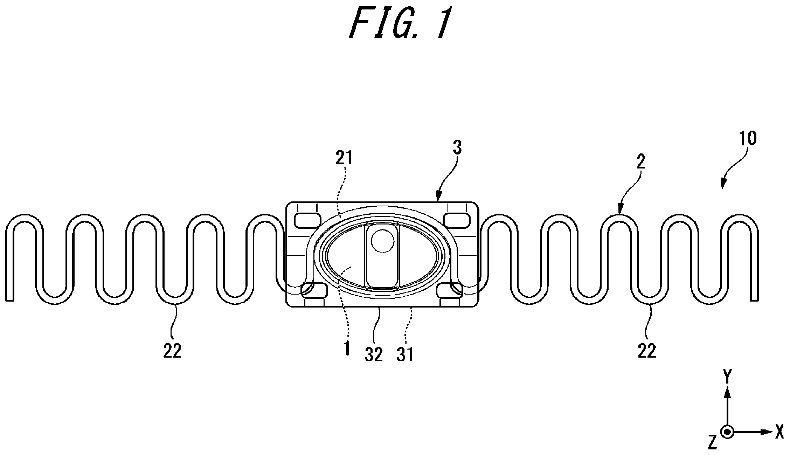

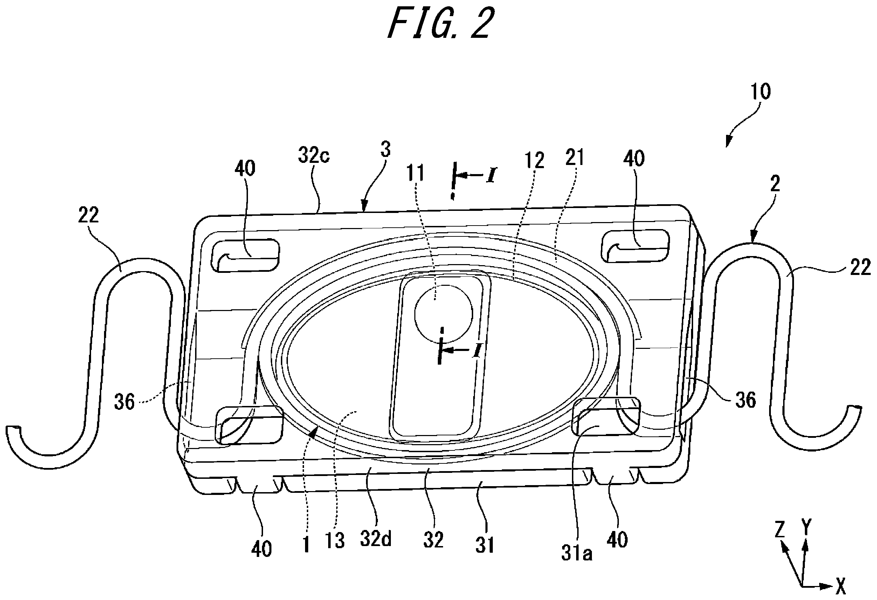

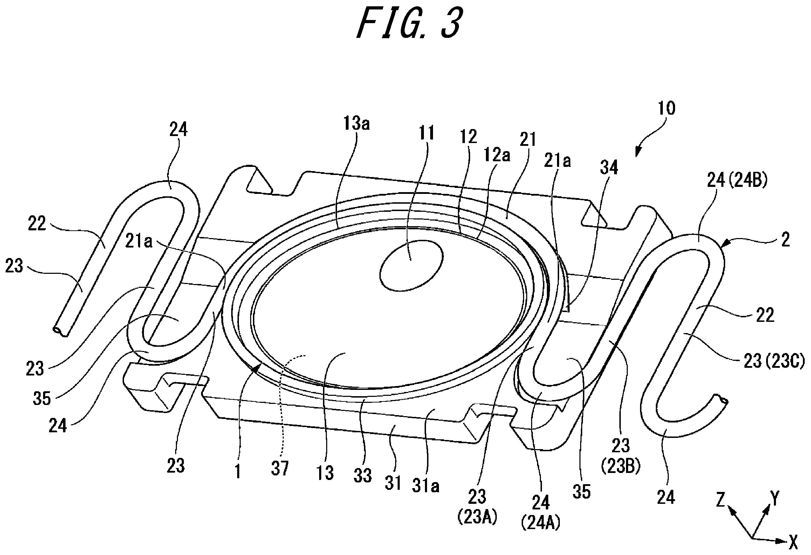

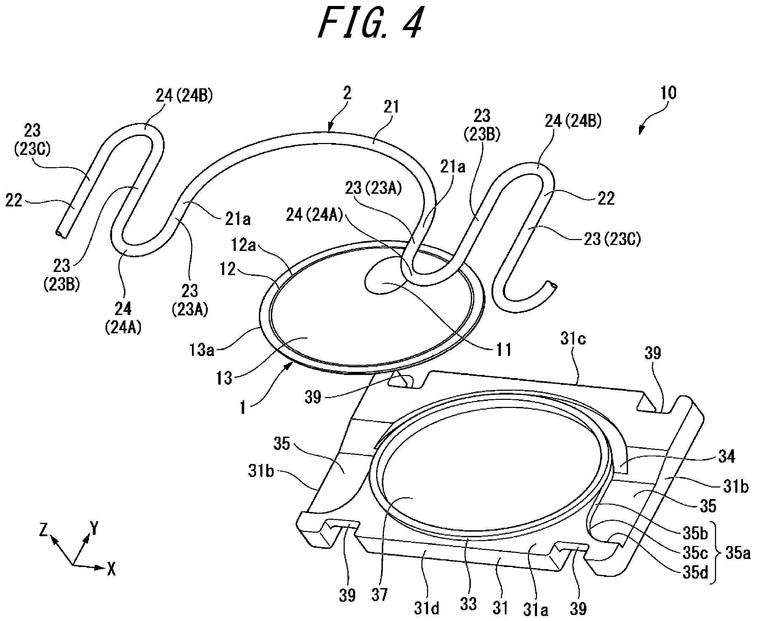

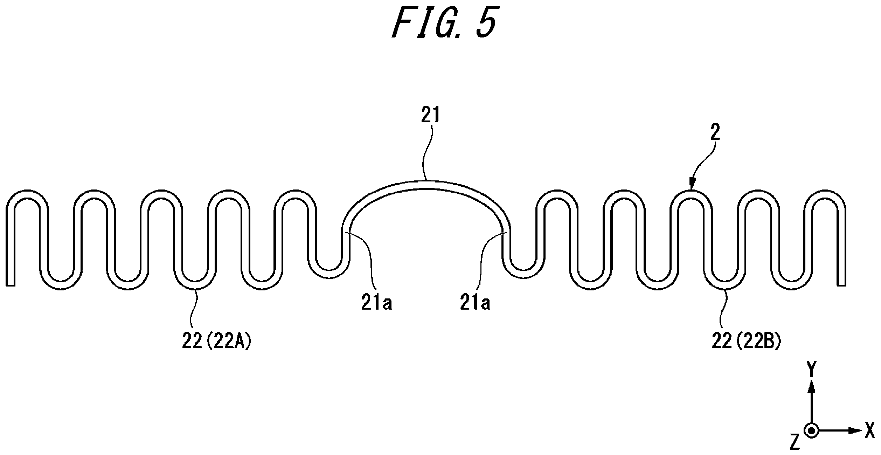

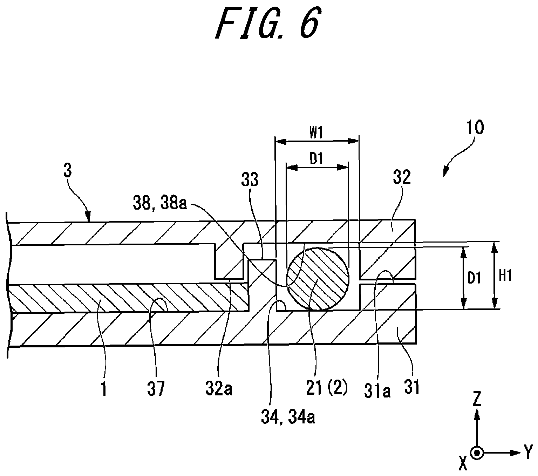

Figure 1 is a plan view of a communication device 10. The communication device may refer to as an "RF tag". Figure 2 is a perspective view of the RF tag 10. Figure 3 is a perspective view of the RF tag 10 with a lid of an exterior body removed. Figure 4 is an exploded perspective view of the RF tag 10. Figure 5 is a plan view of a second antenna 2. Figure 6 is a partial cross-sectional view of the RF tag 10. Figure 6 is a cross-sectional view along the line I-I in Figure 2.

As illustrated in Figures 1 and 2, the RF tag 10 comprises a substrate 1, a second antenna 2, and an exterior body 3. The longitudinal direction (left-right direction in Figure 1) of a main surface 31a of the exterior body 3 (see Figure 3) is referred to as the X direction. One of the X directions (the right direction in Figure 1) is referred to as the +X direction. The other of the X directions (the left direction in Figure 1) is referred to as the -X direction. The short direction of the main surface 31a (see Figure 3) of the exterior body 3 is referred to as the Y direction. The Y direction is orthogonal to the X direction within the plane along the main surface 31a. One of the Y directions (the top direction in Figure 1) is referred to as the +Y direction. The other of the Y direction (the bottom direction in Figure 1) is referred to as the -Y direction. The direction that is perpendicular to the main surface 31a of the exterior body 3 is referred to as the Z direction. The Z direction is perpendicular to the X direction and the Y direction. A view from the Z direction is referred to as a plan view. The Z axis is the central axis along the Z direction.

As illustrated in Figure 3, the substrate 1 comprises an RFID chip 11, a first antenna 12, and a base material 13. The substrate 1 is provided with the RFID chip 11 and the first antenna 12.

The base material 13 is formed into a plate shape. The shape of the base material 13 in a plan view is not particularly limited, but it is preferable that at least part of the outer edge 13a has a curved shape. The curved shape includes, for example, an elliptical arc shape, a circular arc shape, and a higher-order curved shape (such as a quadratic curved shape). The higher-order curved shape includes a parabola shape and a hyperbola shape. The external shape of the base material 13 in a plan view may be, for example, oval, circular, or oblong (a racetrack shape). The external shape of the base material 13 in a plan view is preferably non-circular. In this embodiment, the base material 13 is elliptical in shape. The base material 13 is oriented such that its major axis is oriented in the X direction. As the base material 13, glass epoxy resin boards, ceramics, plastic films, etc. can be used.

The RFID chip 11 can be used to write and read information without contact via the first antenna 12 and the second antenna 2. The RFID chip 11 is mounted on the base material 13.

The first antenna 12 is, for example, a conductive layer formed on one side of the base material 13. The conductive layer is made up of, for example, a conductive foil, a plating layer, and a conductive ink layer, or the like. The conductive foil is formed into a predetermined shape by etching, etc. The plating layer is made up of metals such as copper, silver, gold, platinum, and aluminum, etc. The conductive ink layer is formed by printing or other means using conductive ink. The conductive ink contains conductive particles formed from metals, carbon materials, etc.

The first antenna 12 is formed in a loop shape. The first antenna 12 has, for example, a curved shape that follows the outer edge 13a of the base material 13. The first antenna 12 is formed in an oval loop shape. The first antenna 12 is electrically connected to the RFID chip 11.

The second antenna 2 is an antenna for a booster. The second antenna 2 is, for example, a linear body. The second antenna 2 is formed of metal, for example, steel, stainless steel, copper, or copper alloy, etc. The second antenna 2 can be formed of brass-plated steel wire, for example. The second antenna 2 is a separate object from the substrate 1. The second antenna 2 is a linear body, however, the second antenna may be a plate-shaped body, for example.

The second antenna 2 has an electromagnetic coupling portion 21 and a pair of extended portions 22. The electromagnetic coupling portion 21 has a curved shape. The "curved shape" refers to a shape that bends smoothly, without any sharp bends. The curved shape includes, for example, an elliptical arc shape, a circular arc shape, and a higher-order curved shape (such as a quadratic curved shape). The higher-order curved shape includes a parabola shape and a hyperbola shape. The electromagnetic coupling portion 21 is semi-elliptical in shape. For more details, the electromagnetic coupling portion 21 is a semi-elliptical in shape that extends from one vertex (the vertex that intersects the major axis) of the ellipse to the other vertex (the vertex where the major axis intersects) of the ellipse.

The electromagnetic coupling portion 21 is shaped to surround at least a part of the substrate 1 in a plan view. The electromagnetic coupling portion 21 surrounds the range from one vertex (the vertex that intersects the major axis) to the other vertex (the vertex where the long axis intersects) of the substrate 1 in an elliptical shape (the range of half a circle on the +Y direction side).

The electromagnetic coupling portion 21 has a curved shape (for example, elliptical-arc shape) that follows the outer edge 12a of the first antenna 12 in a plan view. The clearance distance between the electromagnetic coupling portion 21 and the outer edge 12a is almost constant. The electromagnetic coupling portion 21 is located on the outer side of the outer edge 13a of the substrate 1, in a plan view, and is located close to the outer edge 13a. The electromagnetic coupling portion 21 is shaped to follow the outer edge 13a in a plan view. The clearance distance between the electromagnetic coupling portion 21 and the outer edge 13a is almost constant.

The electromagnetic coupling portion 21 is in contactless electromagnetic coupling with the first antenna 12. The electromagnetic coupling is, for example, either electric field coupling or magnetic field coupling. The shape of the cross-section perpendicular to the length of the electromagnetic coupling portion 21 is, for example, circular (see Figure 6).

The pair of extended portions 22 extend from one end and the other end portion 21a of the electromagnetic coupling portion 21. As illustrated in Figure 5, the first extended portion 22A, which is one of the pair of extended portions 22, extends in a meandering manner in the -X direction from the end portion 21a on the -X direction side of the electromagnetic coupling portion 21. The extended portion 22B, which is the other of the pair of extended portions 22, extends in a meandering manner in the +X direction from the end portion 21a on the +X direction side of the electromagnetic coupling portion 21.

The shape of the extended portion 22 in a plan view is, for example, meander, wavy, or zigzag. The extended portion 22 has a meander shape.

As illustrated in Figure 4, the extended portion 22 comprises a plurality of straight sections 23 and a plurality of folding sections 24. The straight section 23 has a straight-line shape that follows the Y direction. The plurality of straight sections 23 are arranged at intervals in the X direction. The folding section 24 connects the ends of the adjacent straight sections 23. The folding section 24 has a curved shape (e.g., an arc shape).

The straight section 23 that is closest to the electromagnetic coupling portion 21 among the plurality of straight sections 23 is referred to as a "first straight section 23A". The straight line 23 that is second closest to the electromagnetic coupling portion 21 among the plurality of straight sections 23 is referred to as a "second straight section 23B". The straight section 23 that is third closest to the electromagnetic coupling portion 21 among the plurality of straight sections 23 is referred to as a "third straight section 23C". The folding section connecting the first straight section 23A and the second straight section 23B is referred to as a "first folding section 24A". The folding section connecting the second straight section 23B and the third straight section 23C is referred to as a "second folding section 24B".

The first straight section 23A extends in the -Y direction from the end portion 21a of the electromagnetic coupling portion 21. The first folding section 24A extends from the end portion in the -Y direction of the first straight section 23A in a curved manner, and reaches the end portion in the -Y direction of the second straight section 23B. In the extended portion 22, the first straight section 23A and part of the first folding section 24A are inside the exterior body 3, however, the other parts of the extended portion 22 extend outside the exterior body 3 (see Figure 3).

As illustrated in Figure 2, the exterior body 3 comprises a plate-shaped main body 31 and a plate-shaped lid 32. The exterior body 3 has a plate-shape as a whole. The main body 31 and the lid 32 are made of resin, for example. Examples of resins include polyamide resins such as nylon 6,6; polyester resins such as polyethylene terephthalate (PET); polyolefin resins such as polyethylene; poly fluoroethylene resin such as polyvinyl fluoride; vinyl polymers such as polyvinyl chloride; and acrylic resins such as polymethylmethacrylate.

As illustrated in Figure 4, the main body 31 is rectangular in a plan view. On the main surface 31a, which is one of the surfaces of the main body 31, a substrate holding recess 37 (substrate holding portion), an antenna holding groove 34, and a pair of side portion recesses 35 are formed. The substrate holding recess 37 is formed by a substrate holding protrusion 33. The substrate holding recess 37 is a recess surrounded by the substrate holding protrusion 33.

The substrate holding protrusion 33 is a rib-like protrusion in the shape of a ring. The substrate holding protrusion 33 has a curved shape (e.g. an oval shape) that follows the outer edge 13a of the substrate 1. The substrate holding protrusion 33 protrudes in the +Z direction from the main surface 31a. The shape of the cross-section perpendicular to the length direction of the substrate holding protrusion 33 is, for example, rectangular. The substrate holding protrusion 33 has a curved shape (e.g. an oval shape) that follows the outer edge 12a of the first antenna 12 in a plan view.

The substrate holding recess 37 holds the substrate 1. The substrate holding recess 37 has a shape that follows the outer edge 13a of the substrate 1 (e.g., an oval shape). The inner dimensions (inner diameter) of the substrate holding recess 37 are almost the same as the outer dimensions (outer diameter) of the substrate 1, or slightly larger than the outer dimensions (outer diameter) of the substrate 1. The substrate holding recess 37 is similar in shape to the substrate 1 in a plan view.

If the substrate 1 and the substrate holding recess 37 have a non-circular shape (e.g., elliptical shape), it is possible to restrict the substrate 1 from tilting around the Z-axis and maintain the correct posture of the substrate 1. This allows the electromagnetic coupling between the first antenna 12 and the electromagnetic coupling portion 21 to be maintained.

The antenna holding groove 34 accommodates the electromagnetic coupling portion 21 of the second antenna 2 (see Figures 3 and 6). The antenna holding groove 34 is formed on the outer side of the substrate holding protrusion 33, close to the substrate holding protrusion 33. The antenna holding groove 34 has a shape that follows the substrate holding protrusion 33 in a plan view. The antenna holding groove 34 has a curved shape (e.g., elliptical-arc shape) that follows the outer edge 12a of the first antenna 12 in a plan view. The antenna holding groove 34 has a curved shape (e.g., elliptical-arc shape) that follows the outer edge 13a of the substrate 1 in a plan view. The antenna holding groove 34 has a half-elliptical shape in a plan view. For details, the antenna holding groove 34 has a semi-elliptical shape extending from one vertex (the vertex that intersects the major axis) to the other vertex (the vertex that intersects the major axis).

The antenna holding groove 34 has a shape to surround at least part of the substrate 1 in a plan view. The antenna holding groove 34 surrounds the range from one vertex (the vertex that intersects the major axis) to the other vertex (the vertex that intersects the major axis) of the elliptical-arc shaped substrate 1 (the range of half a circle on the +Y direction side).

As illustrated in Figure 6, the cross-section that is orthogonal to the length direction of the antenna holding groove 34 is, for example, rectangular. The width (internal dimensions) W1 of the antenna holding groove 34 is greater than the outer diameter (external dimensions) D1 of the electromagnetic coupling portion 21. The difference between the width W1 and the outer diameter D1 can be, for example, 0.01mm to 1mm (preferably, 0.05mm to 0.2mm). Because the width W1 of the antenna holding groove 34 is greater than the outer diameter D1 of the electromagnetic coupling portion 21, the electromagnetic coupling portion 21 is housed in the antenna holding groove 34 in a state where it can be displaced in the wire diameter direction (e.g., Y direction). The "wire diameter direction" is the direction that is perpendicular to the length direction of the electromagnetic coupling portion 21. The electromagnetic coupling portion 21 is also capable of displacement in the length direction with respect to the antenna holding groove 34.

The depth of the antenna holding groove 34 is determined so that the height (internal dimension) H1 from the bottom surface 34a of the antenna holding groove 34 to the lid portion 32 (top surface 38a) is greater than the outer diameter D1 of the electromagnetic coupling portion 21. The difference between the height H1 and the outer diameter D1 can be, for example, 0.01mm to 1mm (preferably, 0.05mm to 0.2mm). Because the height H1 of the antenna holding groove 34 is greater than the outer diameter D1 of the electromagnetic coupling portion 21, the electromagnetic coupling portion 21 is housed in the antenna holding groove 34 in a state where it can be displaced in the wire diameter direction (for example, the Z direction).

As illustrated in Figure 4, a side recess 35 is formed on one side portion and the other side portion of the main surface 31a. The side recess 35 is formed in an area that includes a side edge 31b of the main body 31 in the X direction. The inner edge 35a of the side portion recess 35 has a first straight section 35b that runs along the Y-direction, a curved section 35c, and a second straight section 35d that runs along the X-direction.

The first straight section 35b is the part that extends in the -Y direction, starting from the end portion of the inner edge of the antenna holding groove 34. The curved section 35c is the part that extends from the tip of the straight section 35b, with the inclination angle to the X-direction gradually decreasing. The second straight section 35d is the part that extends from the tip of the curved section 35c along the X-direction to the side edge 31b.

As illustrated in Figure 3, the side recess 35 encloses, in a plan view, the first straight section 23A of the second antenna 2 and a part of the first folding portion 24A of the same. The first straight section 23A is close to the first straight section 35b (see Figure 4). The first folding section 24A is close to the curved section 35c (see Figure 4). The side recess 35 accommodates at least the range of the predetermined length of the second antenna 2 (the first straight section 23A and a part of the first folding section 24A).

As illustrated in Figure 2, the side recess 35 has sufficient distance in the Y direction, so a slit-shaped side opening 36 extending in the Y direction (direction along the main surface 31a) is formed on the side edge 31b. The second antenna 2 extends outside the exterior body 3 through the side opening 36. As illustrated in Figure 4, two locking recesses 39 are formed at an edge 31c on the +Y direction of the main body 31, offset in the X direction. Two locking recesses 39 are also formed at an edge 31d on the -Y direction of the main body 31, offset in the X direction.

As illustrated in Figure 2, the lid 32 is rectangular in a plan view. The lid 32 is the same shape as the main body 31 and is installed facing the main surface 31a of the main body 31. The lid 32 is installed so that it overlaps the main surface 31a of the main body 31 in a plan view.

As illustrated in Figure 6, an opposing surface 32a of the lid 32 is the surface that faces the main surface 31a of the main body 31. A positioning groove 38 is formed on the opposing surface 32a. The positioning groove 38 is a circular groove. The shape of the cross-section perpendicular to the length direction of the positioning groove 38 is, for example, rectangular.

The positioning groove 38 has a curved shape (e.g. an oval shape) corresponding to the substrate holding protrusion 33 and the antenna holding groove 34. The positioning groove 38 has a width that encompasses the substrate holding protrusion 33 and the antenna holding groove 34 in a plan view. Part of the top surface 38a of the positioning groove 38 faces the bottom surface 34a of the antenna holding groove 34.

As illustrated in Figure 2, two locking protrusions 40 are formed on the edge 32c on the +Y direction of the lid 32, offset in the X direction. Two locking protrusions 40 are also formed on the edge 32d on the -Y direction of the lid 32, offset in the X direction.

The locking protrusion 40 has a locking claw (not illustrated) at a tip thereof. The locking protrusion 40 is inserted into the locking recess 39 of the main body 31. The locking claw of the locking protrusion 40 locks into the main body portion 31. As a result, the lid portion 32 is coupled to the main body portion 31 in a removable manner.

The exterior body 3 is not fixed to the second antenna 2. In other words, the exterior body 3 is non-fixed to the second antenna 2.

For example, the RF tag 10 can be installed in a formed object made of rubber or resin, etc. For example, the RF tag 10 can be embedded in the formed object. The formed object is, for example, an elastic body and can be elastically deformed. If the formed object is stretched or bent, there is a possibility that an external force will act on the second antenna 2. For example, it is conceivable that a tensile force in the direction away from the exterior body 3 along the X-direction acts on the extended portion 22. It is also conceivable that a force in the direction approaching the exterior body 3 along the X-direction acts on the extended portion 22. As in the present embodiment, when installing the RF tag 10 on a tire, the RF tag 10 can be provided by enclosing it in a fixing member (lamination rubber) made of a rubber sheet. This reliably prevents damage to the RF tag 10. In addition, if the RF tag 10 is enclosed in a fixing member and then incorporated into the tire, the RFID tag 10 can be easily incorporated into the tire 1 without risk of damage.

### [Effects of RF tag]

In the RF tag 10, the electromagnetic coupling portion 21 of the second antenna 2 is housed in the antenna holding groove 34 in a state where it can be displaced in the wire diameter direction (a direction that is orthogonal to the length direction of the electromagnetic coupling portion 21) (see Figure 6). Because the electromagnetic coupling portion 21 is displaceable, the stress on the second antenna 2 can be relieved when an external force acts on the second antenna 2. Thus, damage to the second antenna 2 can be made less likely to occur. In contrast, if the second antenna is fixed to the exterior body, when an external force acts on the second antenna, stress will be concentrated at the base portion (the root portion) of the second antenna that extends from the exterior body, and there is a possibility that damage may occur at this point.

The electromagnetic coupling portion 21 of the second antenna 2 has a shape that follows the outer edge 12a of the first antenna 12, so the electromagnetic coupling portion 21 can be electromagnetically coupled sufficiently to the first antenna 12. The antenna holding groove 34 is formed along the outer edge 12a of the first antenna 12, so the electromagnetic coupling portion 21 of the second antenna 2 can be arranged along the first antenna 12. Therefore, the electromagnetic coupling portion 21 can be electromagnetically coupled sufficiently to the first antenna 12.

The electromagnetic coupling portion 21 of the second antenna 2 has a curved shape (e.g., a half-elliptical shape), so even if an external force acts on the second antenna 2, stress concentration is less likely to occur than if it had a rectangular shape. Thus, damage to the second antenna 2 can be made less likely to occur. In contrast, if the electromagnetic coupling portion has a rectangular shape, when an external force acts on the second antenna, stress will be concentrated at the corners (bend points), and there is a possibility that damage may occur at this point.

The antenna holding groove 34 is formed along the outer edge 13a of the substrate 1, so the electromagnetic coupling portion 21 of the second antenna 2 can be arranged along the first antenna 12. Therefore, the electromagnetic coupling portion 21 can be electromagnetically coupled sufficiently to the first antenna 12.

The exterior body 3 comprises the main body 31, and the lid 32 that is stacked on the main surface 31a. The substrate holding recess 37 and the antenna holding groove 34 are formed on the main surface 31a. Therefore, the lid 32 can prevent the substrate 1 and the second antenna 2 from dropping out of the main body 31. Thus, the substrate 1 and the second antenna 2 can be stably held in the exterior body 3.

In the RF tag 10, the slit-shaped side opening 36 extending in the Y direction (direction along the main surface 31a) is formed on the side edge 31b of the exterior body 3. Therefore, the second antenna 2 can be displaced in the Y direction relative to the exterior body 3. Therefore, if an external force acts on the second antenna 2, the stress can be relieved by the displacement. Thus, damage to the second antenna 2 can be made less likely to occur.

For example, in the RF tag 10, the outer edge 13a of the substrate 1 and the outer edge 12a of the first antenna 12 have a curved shape along their entire length, however, the substrate and the first antenna may have curved outer edges in part. The exterior body 3 comprises the main body 31 and the lid 32, but the configuration of the exterior body is not particularly limited. For example, the exterior body does not have to have a lid. The exterior body does not have to be flat and can be of other shapes (such as block-shaped).

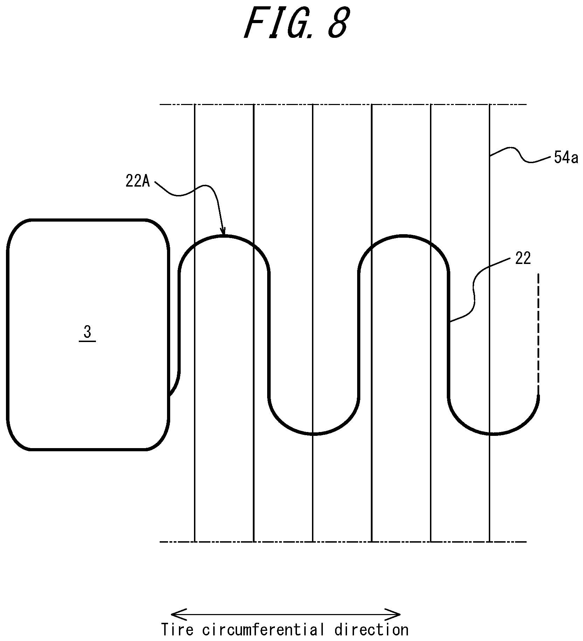

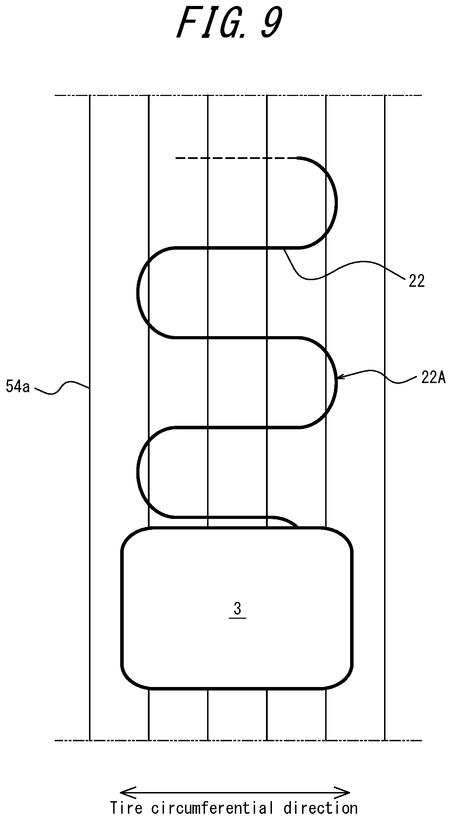

As illustrated above, the communication device 10 has an antenna. The antenna has a part (extended portion 22) in which a predetermined shape, where the antenna is folded back at a vertex 22A (see Figures 8 and 9) to a direction perpendicular to an extending direction and travels back and forth, is repeatedly arranged in the extending direction. The shape of this part (extended portion 22) is specifically illustrated as a meandering shape, a wavy shape, or a zigzag shape. It will be noted that, in Figures 8 and 9, only one of the pair of antennas is illustrated, and the antenna extending in the opposite direction is omitted from the illustration.

### <Pneumatic tire>

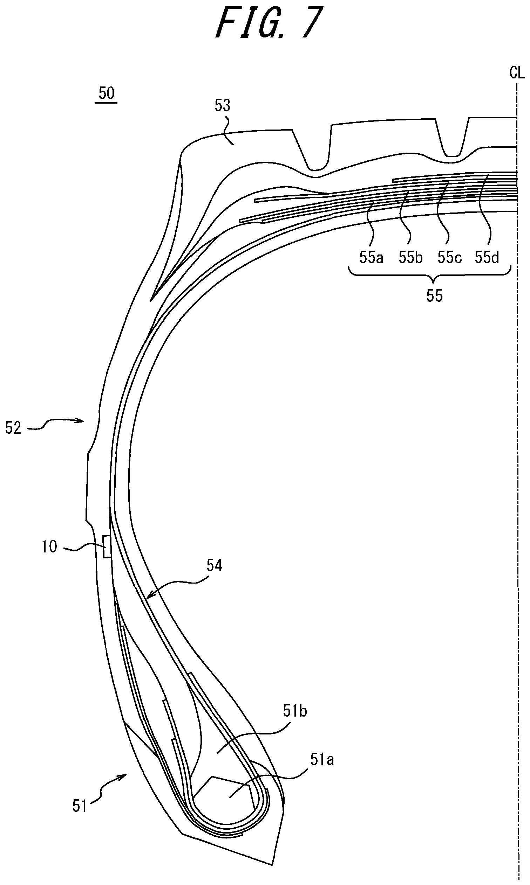

Figure 7 is a cross-sectional view in the tire width direction of a pneumatic tire according to one embodiment of the present disclosure. Figure 7 illustrates only one tire width-direction half, with the tire equatorial plane CL as the boundary, but the other half is also of the same structure. On the other hand, the pneumatic tire may have asymmetric sections, with the tire equatorial plane CL as the boundary. Figure 8 is a drawing used to explain the position of the vertex. Figure 9 is a drawing of another example used to explain the position of the vertex.

This pneumatic tire 50 is a truck/bus tire, but it can also be used as a heavy-duty tire or a passenger vehicle tire.

The internal structure of the tire is not limited, but the following structure can be used as an example. This tire 50 has a pair of bead portions 51, a pair of sidewall portions 52 connected to the bead portions 51, and a tread portion 53 connected to the sidewall portions 52. The bead portion 51 has a bead core 51a embedded therein, and a bead filler 51b is arranged on the outer side in the tire radial direction of the bead core 51a. In addition, this tire 50 comprises a carcass 54 consisting of one or more carcass plies that straddles in a toroidal shape between the bead portion 50. The carcass ply is made of radially-arranged carcass cords 54a coated with rubber, and the carcass cords are arranged in the tire circumferential direction (at the tire radial position where the communication device is provided) at a pitch interval P (mm). In this example, the carcass cord is made of steel cord. The number of carcass plies is not limited. The pitch interval P (mm) is not particularly limited, but can be 2.0 to 4.0 mm, for example. In addition, the diameter of the carcass cord is not particularly limited, but can be 0.5 to 1.5 mm.

On the outer side in the tire radial direction of the crown portion of the carcass 54, a belt 55 consisting of one or more (four, in the illustrated example) belt layers 55a to 55d is arranged, and tread rubber is arranged on the outer side in the tire radial direction of the belt 55. In this example, the belt cord of the belt 55 is a steel cord. The belt cord can be inclined at an angle of, for example, 30 to 60 degrees with respect to the tire circumferential direction. The number of the belt layers and the belt width are not particularly limited.

This tire 50 comprises an RF tag as a communication device. The RF tag comprises an IC chip and an antenna. The RF tag may be arranged, for example, sandwiched between a plurality of members of the same or different types that constitute the tire. This makes it easier to attach the RF tag during tire production, and improves the productivity of tires comprising RF tags. In this example, the RF tag is embedded in the sidewall portion 52, but it may also be arranged sandwiched between, for example, the bead filler and other members adjacent to the bead filler. The RF tag may be embedded in any of the members that constitute the tire. In this way, the load on the RF tag can be reduced compared to when it is arranged sandwiched between a plurality of members that constitute the tire, thereby improving the durability of the RF tag. In this example, the RF tag may be embedded in rubber components such as tread rubber or side rubber. It is preferable that the RF tag is not arranged at positions that are boundaries between members with different levels of rigidity in a direction of periphery length, which is the direction along the outer surface of the tire when viewed in cross section in the tire width direction. In this way, the RF tag is not disposed in a position where distortion is likely to be concentrated based on the rigidity step. This reduces the load on the RF tag, thereby improving the durability of the RF tag. In this example, it is preferable that the RF tag is not arranged in a position that is the boundary between, for example, the edge of the carcass and the member (e.g. side rubber, etc.) adjacent to this edge of the carcass when viewed in cross section in the tire width direction. The number of RF tags is not limited. The tire may have only one RF tag, or it may have two or more. Here, the RF tag is described as an example of the communication device, but a communication device other than the RF tag may also be used.

The RF tag may be arranged, for example, in the tread portion of the tire. In this way, the RF tag will not be damaged by the tire side cut. The RF tag may be arranged, for example, on the inner surface of the tire in the tread portion. The RF tag may be arranged, for example, in the center of the tread in the tire width direction. The center of the tread is a position where deflection is unlikely to be concentrated in the tread portion. In this way, the load applied on the RF tag can be reduced, thereby improving the durability of the RF tag. This also makes it possible to prevent differences in communication with the RF tag from both outer sides in the tire width direction of the tire. In this example, the RF tag may be arranged, for example, within a range of 1/2 of the tread width with the tire equatorial plane as the center, in the tire width direction. The RF tag may be arranged, for example, at a tread edge portion in the tire width direction. If the position of the reader that communicates with the RF tag is predetermined, the RF tag may be arranged, for example, at the tread edge portion on one side close to this reader. In this example, the RF tag may be arranged, for example, within a range of 1/4 of the tread width with the tread edge as the outer edge, in the tire width direction.

The RF tag may be arranged, for example, on the tire inner-cavity side than the carcass including one or more carcass plies straddling between bead portions. In this way, the RF tag becomes less likely to be damaged by external impacts to the tire, or by damage such as side cuts or nail punctures. As an example, the RF tag may be arranged in close contact with the surface of the carcass facing the inner cavity of the tire. As another example, when there is another member on the tire inner-cavity side of the carcass, the RF tag may be arranged between the carcass and this another member located on the tire inner-cavity side than the carcass. This another member that is located on the tire inner-cavity side than the carcass is, for example, an inner liner, which forms the inner surface of the tire. As another example, the RF tag may be attached to the inner surface of the tire facing the inner cavity of the tire. By attaching the RF tag to the inner surface of the tire, it is easy to attach the RF tag to the tire, and to inspect and replace the RF tag. In other words, the ease of attachment and maintenance of the RF tag can be improved. In addition, by attaching the RF tag to the inner surface of the tire, it is possible to prevent the RF tag from becoming the core of a tire failure, compared to a configuration in which the RF tag is embedded inside the tire. In addition, when the carcass has a plurality of carcass plies and there is a position where the plurality of carcass plies are overlapped, the RF tag may be arranged between the overlapped carcass plies.

The RF tag may be arranged, for example, on the outer side in the tire radial direction of a belt including one or more belt ply in the tread portion of the tire. As an example, the RF tag may be arranged in close contact with the belt on the outer side in the tire radial direction of the belt. Also, as another example, when a reinforcement belt layer is provided, the RF tag may be arranged in close contact with the reinforcement belt layer on the outer side in the tire radial direction of the reinforcement belt layer. In addition, as another example, the RF tag may be embedded in the tread rubber on the outer side in the tire radial direction of the belt. By arranging the RF tag in the tread portion of the tire on the outer side of the belt, communication with the RF tag from the outside of the tire in the tire radial direction is less likely to be disturbed by the belt. Therefore, communication with the RF tag from the outside of the tire in the tire radial direction can be improved. In addition, the RF tag may be arranged, for example, on the inner side in the tire radial direction of the belt in the tread portion of the tire. In this way, the outer side in the tire radial direction of the RF tag is covered by the belt, so the RF tag becomes less likely to be damaged by impacts from the tread surface or by nail punctures, etc. As an example of this, the RF tag may be arranged between the belt and the carcass which is located on the inner side in the tire radial direction of the belt. In addition, when the belt comprises a plurality of belt plies, the RF tag may be arranged between any two belt plies in the tread portion of the tire. In this way, the outer side in the tire radial direction of the RF tag is covered by one or more belt plies, so the RF tag becomes less likely to be damaged by impacts from the tread surface or by nail punctures, etc.

The RF tag may be arranged, for example, between cushion rubber and the tread rubber, or between cushion rubber and side rubber. In this way, the impact on the RF tag can be mitigated by the cushioning rubber, thereby improving the durability of the RF tag. The RF tag may also be embedded in cushioning rubber, for example. Furthermore, the cushioning rubber may be composed of a plurality of rubber members of the same or different types that are adjacent to each other. In such cases, the RF tag may be arranged sandwiched between the plurality of rubber members that make up the cushioning rubber.

The RF tag may be arranged, for example, at the location in the sidewall portion or the bead portion of the tire. The RF tag may be arranged, for example, on the sidewall portion or the bead portion on one side that is close to the reader that can communicate with the RF tag. This improves communication between the RF tag and the reader. As an example, the RF tag may be arranged between the carcass and the side rubber, or between the tread rubber and the side rubber. The RF tag may be arranged, for example, between the tire maximum width position and the tread surface position in the tire radial direction. With this configuration, compared to a configuration in which the RF tag is arranged on the inner side in the tire radial direction than the tire maximum width position, communication with the RF tag from the outside of the tire in the tire radial direction can be improved. The RF tag may be arranged, for example, on the inner side in the tire radial direction than the tire maximum width position. With this configuration, the RF tag is arranged near the bead portion having high rigidity. This reduces the load applied on the RF tag, thereby improving the durability of the RF tag. As an example, the RF tag may be arranged in a position adjacent to the bead core in the tire radial direction or the tire width direction. Distortion is less likely to concentrate near the bead core, which reduces the load on the RF tag, thereby improving the durability of the RF tag. In particular, it is preferable that the RF tag is arranged on the inner side in the tire radial direction than the tire maximum width position and on the outer side in the tire radial direction than the bead core of the bead portion. With this configuration, as well as the durability of the RF tag can be improved, the communication between the RF tag and the reader is less likely to be disturbed by the bead core, so the communication performance of the RF tag can be improved. In addition, when the side rubber is composed of a plurality of rubber members of the same or different types that are adjacent to each other in the tire radial direction, the RF tag may be arranged sandwiched between the plurality of rubber members that constitute the side rubber. The RF tag may be arranged, for example, on the outer surface of the side rubber.

The RF tag may be arranged sandwiched between a stiffener (a bead filler) and the member adjacent to the stiffener. With this configuration, it is possible to arrange the RF tag in a position where the strain is less likely to be concentrated due to the arrangement of the stiffener. This reduces the load applied on the RF tag, thereby improving the durability of the RF tag. The RF tag may be arranged, for example, sandwiched between the stiffener and the side rubber. In addition, the RF tag may be arranged sandwiched between the stiffener and the carcass, for example. The part of the carcass where the RF tag is sandwiched between the carcass and stiffener may be located on the outer side in the tire width direction with respect to the stiffener, or on the inner side in the tire width direction with respect to the stiffener. If the part of the carcass where the RF tag is sandwiched between the carcass and stiffener is located on the outer side in the tire width direction with respect to the stiffener, the load applied to the RF tag due to impact or damage from the outside in the tire width direction of the tire can be reduced even more, thereby improving the durability of the RF tag. The stiffener may comprise a part that is adjacent to a rubber chaffer. In such a case, the RF tag may be arranged sandwiched between the stiffener and the rubber chaffer. The stiffener may comprise a part adjacent to a hat rubber on the outer side in the tire width direction. In such a case, the RF tag may be arranged sandwiched between the stiffener and the hat rubber. The stiffener may be composed of a plurality of rubber members of different hardness. In such a case, the RF tag may be arranged sandwiched between the plurality of rubber members that constitute the stiffener. The RF tag may be arranged sandwiched between the hat rubber and the member adjacent to the hat rubber. For example, the RF tag may be arranged sandwiched between the hat rubber and the carcass ply. With this configuration, the impact on the RF tag can be mitigated by the hat rubber. As a result, the durability of the RF tag can be improved.

The RF tag may be arranged, for example, sandwiched between the rubber chaffer and the side rubber. With this configuration, it is possible to arrange the RF tag in a position where the strain is less likely to be concentrated due to the arrangement of the rubber chaffer. Therefore, the load applied on the RF tag can be reduced, thereby improving the durability of the RF tag. The RF tag may be arranged, for example, sandwiched between the rubber chaffer and the carcass. With this configuration, it is possible to reduce the load applied on the RF tag due to impact and damage from the rim, thereby improving the durability of the RF tag.

The RF tag may be arranged, for example, sandwiched between a nylon chaffer and another member that is adjacent to the nylon chaffer on the inner side or the outer side in the tire width direction thereof. With this configuration, the position of the RF tag is less likely to change when the tire is deformed. This reduces the load applied on the RF tag when the tire deforms, thereby improving the durability of the RF tag. For example, the nylon chaffer may have a part adjacent to the rubber chaffer on the outer side in the tire width direction. In such a case, the RF tag may be arranged sandwiched between the nylon chaffer and the rubber chaffer. For example, the nylon chaffer may have a part adjacent to the side rubber on the outer side in the tire width direction. In such a case, the RF tag may be arranged sandwiched between the nylon chaffer and the side rubber. For example, the nylon chaffer may have a part adjacent to the stiffener on the inner side in the tire width direction. In such a case, the RF tag may be arranged sandwiched between the nylon chaffer and the stiffener. In addition, the nylon chaffer may have a part adjacent to the hat rubber on the inner side in the tire width direction, for example. In such a case, the RF tag may be arranged sandwiched between the nylon chaffer and the hat rubber. Furthermore, the nylon chaffer may have a part adjacent to the carcass on the inner side in the tire width direction. In such a case, the RF tag may be arranged sandwiched between the nylon chaffer and the carcass. Furthermore, the nylon chaffer may have a part adjacent to the wire chaffer on the inner side in the tire width direction. In such a case, the RF tag may be arranged sandwiched between the nylon chaffer and the wire chaffer.

In this way, the RF tag may be arranged sandwiched between the nylon chaffer and another member that is adjacent to this nylon chaffer on the outer side or inner side in the tire width direction. In particular, the outer side in the tire width direction of the RF tag is covered with a nylon chaffer, which reduces the load on the RF tag due to impact or damage from the outside of the tire in the tire width direction, thereby improving the durability of the RF tag.

The RF tag may be arranged sandwiched between the wire chaffer and another member that is adjacent to the inner side or outer side in the tire width direction of this wire chaffer. With this configuration, the position of the RF tag is less likely to change when the tire is deformed. This reduces the load applied on the RF tag when the tire deforms, thereby improving the durability of the RF tag. The other member adjacent to the wire chaffer on the inner side or outer side in the tire width direction may be a rubber member, such as a rubber chaffer. In addition, the other member adjacent to the wire chaffer on the inner side or outer side in the tire width direction may be, for example, a carcass.

As illustrated in Figure 8, the carcass code 54a (in a case where there are a plurality of carcass plies, the carcass code of the carcass ply closest to the RF tag) is arranged at a prescribed pitch interval in the tire circumferential direction, the antenna has a part (extended portion 22) in which a predetermined shape, where the antenna is folded back at a vertex 22A to a direction perpendicular to an extending direction and travels back and forth, is repeatedly arranged (in the illustrated example, in the tire circumferential direction) at a prescribed pitch interval in the extending direction, and at least one vertex 22A is located in a position that does not intersect the carcass cord 54a when viewed from a direction that is perpendicular to a surface of the pneumatic tire (for example, if the RF tag is arranged on the outer side in the tire width direction than the carcass, when viewed from the outside of the tire in a direction perpendicular to the outer surface of the tire, or if the RF tag is arranged on the inner side in the tire width direction than the carcass, when viewed from the inside of the tire in a direction perpendicular to the inner surface of the tire).

The effects of the pneumatic tire of the present embodiment will be described below.

It was found that the vertex of the extended portion 22A of the antenna 22 is a point where stress is easily applied and is prone to failure. According to the pneumatic tire of this embodiment, at least one vertex 22A is located in a position where it does not intersect the carcass cord 54a (i.e., in a position of the coating rubber of the carcass) when viewed from a direction that is perpendicular to the surface of the pneumatic tire, therefore, when stress is applied to the vertex 22A, the coating rubber between the carcass cords can deform to relieve the stress, and failures starting from the vertex 22A and the surrounding area can be prevented.

As described above, according to the pneumatic tire of this embodiment, it is possible to improve the durability on the antenna of the communication device.

As illustrated in Figure 9, similarly when the extending direction of the extended portion 22A of the antenna is in the tire radial direction, at least one vertex 22A is in a position where it does not intersect the carcass cord 54a when viewed from a direction that is perpendicular to the surface of the pneumatic tire, thereby improving the durability of the antenna of the communication device.

It is preferable that the vertex closest to the RF chip is located in a position that does not intersect with the carcass cord when viewed from a direction that is perpendicular to the surface of the pneumatic tire. This is because failures are most likely to occur at the vertex closest to the RF chip, so it is effective to improve the durability of this part.

It is preferable that the part in which a predetermined shape is repeatedly arranged has a meandering shape, wavy shape, or zigzag shape. This shape is advantageous for improving communication because the length of the path is long relative to the unit extending length (the length in the X direction in Figure 1).

The above is an explanation of the embodiment of the present disclosure, however, this disclosure is not limited to the above embodiment in any way. For example, the extending direction of the extended portion 22 of the antenna is in the tire circumferential direction in Figure 8, and the extending direction of the antenna extension 22 is in the tire radial direction in Figure 9, but the extending direction of he extended portion 22 of the antenna may be inclined with respect to the tire circumferential direction or the tire radial direction.

### [Contributing to the United Nations-led Sustainable Development Goals (SDGs)]

The SDGs have been proposed in order to realize a sustainable society. One embodiment of this disclosure is considered to be a technology that can contribute to "No. 12_ Ensure Sustainable Consumption and Production Patterns".

### REFERENCE SIGNS LIST

- 1: Substrate
- 2: Second antenna
- 3: Exterior body
- 10: RF tag (Communication device)
- 11: RFID chip
- 12: First antenna
- 12a: Outer edge
- 21: Electromagnetic coupling portion
- 21a: End portion
- 22: Extended portion
- 34: Antenna holding groove
- 37: Substrate holding recess (substrate holding portion)
- 50: Pneumatic tire
- 51: Bead portion
- 52: Sidewall portion
- 53: Tread portion
- 54: Carcass
- 55: Belt
- CL: Tire equatorial plane

## Claims

1. A pneumatic tire, comprising a carcass consisting of one or more carcass plies that straddle in a toroidal shape between a pair of bead portions, wherein
the carcass ply is made of radially arranged carcass cords covered with rubber,
the pneumatic tire is provided with a communication device with an antenna,
the antenna has a part in which a predetermined shape, where the antenna is folded back at a vertex to a direction perpendicular to an extending direction and travels back and forth, is repeatedly arranged in the extending direction, and
at least one of the vertices is located in a position that does not intersect the carcass cord when viewed from a direction that is perpendicular to a surface of the pneumatic tire.

2. The pneumatic tire as described in claim 1, wherein the communication device comprises an RF chip, and
the vertex closest to the RF chip is located in a position that does not intersect the carcass cord when viewed from a direction that is perpendicular to the surface of the pneumatic tire.

3. The pneumatic tire as described in claim 1 or 2, wherein the part in which a predetermined shape is repeatedly arranged has a meandering shape, wavy shape, or zigzag shape.
